# EUROPÄISCHE PATENTSCHRIFT

(11) **EP 2 241 777 B1**
(45) Veröffentlichungstag und Bekanntmachung des Hinweises auf die Patenterteilung: **25.05.2016**
(21) Anmeldenummer: 10003236.6
(22) Anmeldetag: 26.03.2010
(51) Int. Cl.: F16D 27/00

(54) **Flip-Flop-Kupplung**
Flip flop coupling
Couplage à bascule

(30) Priorität: 17.04.2009 DE 102009017566
(43) Veröffentlichungstag der Anmeldung: 20.10.2010
(73) Patentinhaber: LICOS Trucktec GmbH, 88677 Markdorf (DE)
(72) Erfinder: Krafft, Rainer, Dr., 88633 Heiligenberg (DE); Geiger, Sigmund, 88677 Markdorf (DE)
(74) Vertreter: Otten, Roth, Dobler & Partner mbB Patentanwälte

(56) Entgegenhaltungen:
- EP-A2- 0 793 034
- DE-A1- 10 309 548
- DE-A1-102004 039 264
- US-A- 3 741 353
- US-A- 5 739 605

## Beschreibung

Die Erfindung betrifft eine elektromagnetisch betätigbare Reibscheibenkupplung für ein Kraftfahrzeug mit einem Rotor, einer Ankerscheibe, die über Magnetkräfte gegen den Rotor anziehbar ist, und einer schaltbaren Spule zum Aufbringen einer Kraft auf die Ankerscheibe gemäß Anspruch 1.

### Stand der Technik

Elektromagnetisch betätigbare Kupplungen, in denen Permanentmagnete eingesetzt werden, sind bekannt. Die Permanentmagnete werden beispielsweise dazu eingesetzt, die Anziehungskraft auf Reibflächen zu erhöhen oder durch Wirbelstiominduktion eine nicht drehfeste Übertragung einer Drehbewegung hervorzurufen. Weiterhin werden Permanentmagnete in solchen Kupplungen auch dazu eingesetzt, einen bestimmten Schaltzustand der Kupplung auch bei Ausfall der Stromzufuhr festzuhalten, zum Beispiel den eingekuppelten, während ein zweiter Zustand durch Bestromung der Elektromagnetspule, deren Kraft die Wirkung der Permanentmagnete aufhebt, erreicht wird. Somit muss mindestens einer der Kupplungszustände überwiegen bzw. vollständig durch die von der Elektromagnetspule aufgebrachte Kraft aufrecht erhalten werden. Deshalb stellen elektromagnetische Kupplungen erhebliche Verbraucher elektrischer Leistung z.B. in Fahrzeugen dar.

DE102004039264 zeigt eine Kupplung der einleitend beschrieben Art, die insbesondere beim Einsatz in Fahrzeugen energiesparend betrieben werden kann

### Aufgaben und Vorteile der Erfindung

Die Erfindung liegt die Aufgabe zugrunde, eine solche elektromagnetisch betätigbare Kupplung weiter zu entwickeln, die sich mit verringertem materialaufwand und Platzbedarf herstellen lässt. Diese Aufgabe wird durch eine Kupplung nach Anspruch 1 gelöst. In den abhängigen Ansprüchen werden weitere vorteilhafte Ausbildungen der Erfindung beschrieben.

Die Erfindung geht aus von einer elektromagnetisch betätigbaren Reibscheibenkupplung für ein Kraftfahrzeug mit einem Rotor, insbesondere zum Einleiten eines Antriebsmöments, einer Ankerscheibe, die über Magnetkräfte gegen den Rotor anziehbar ist, und einer schaltbaren Spule zum Aufbringen einer Kraft auf die Ankerscheibe. Der Kern der Erfindung liegt darin, dass Permanentmagnete vorgesehen sind, die eine Anzugskraft der Ankerscheibe gegen ein mit der Ankerscheibe, magnetisch zusammenwirkendes Bauteil bewirken, so dass die Ankerscheibe am Bauteil anliegt, wobei Kupplungselemente derart aufeinander abgestimmt sind, dass die Ankerscheibe in einer vom Bauteil getrennten Position verbleibt, wenn durch die elektrische Spule entgegen der Kraft der Permanentmagnete auf die Ankerscheibe eine Schaltkraft aufgebracht wurde, die die Trennung der Ankerscheibe vom Bauteil bewirkt und daraufhin eine magnetische Schaltkraft der elektrischen Spule entfällt, wobei die Spule in ihrer leistungsmäßigen Auslegung auf die zur Trennung der Ankerscheibe notwendige Stromstärke derart abgestimmt ist, dass diese Stromstärke über der für einen Dauerbetrieb der Elektromagnetspule zulässigen Stromstärke liegt. Die Kräfte auf die Ankerscheibe werden für ausgezeichnete Positionen abgestimmt, damit diese ohne wesentliche Unterstützung durch den Elektromagneten dauerhaft erhalten bleiben. Daher wird die Magnetspule vor allem von den Strömen belastet, mit denen die Position der Ankerscheibe verändert wird. Ein gegebenenfalls kurzer Stellweg zwischen beiden stabilen Positionen der Ankerscheibe sowie die magnetische Anziehungskraft auf die Ankerscheibe, die bei Annäherung der Pole stark nicht linear ansteigt, haben den Vorteil, dass der Positionswechsel der Ankerscheibe in sehr kurzer Zeit beispielsweise Bruchteilen einer Sekunde stattfinden kann. Dagegen ist die Verweildauer der Kupplung im eingekuppelten bzw. ausgekuppelten Zustand gegenüber der Schaltdauer sehr groß. Daher kann die Magnetspule kurzzeitig mit einer erhöhten Stromstärke überlastet werden. Die Dauer des Strompulses ist auf die Dauer des Positionswechsels begrenzt. Die dabei elektrisch in die Kupplung eingebrachte Wärme wird zu einem großen Teil oder vollständig an die Umgebung abgegeben, während diese im ein- bzw. ausgekuppelten Zustand verweilt. Dies bietet den Vorteil, dass die Kupplung mit einer kleineren Elektromagnetspule aufgebaut und somit kompakter gestaltet werden kann.

Die Aufgabe der Permanentmagnete besteht darin, eine Kraft auf die Ankerscheibe aufzubringen, so dass sie in einer Position gehalten wird, die einem vorbestimmten Schaltzustand der Kupplung entspricht. Beispielsweise kann sich die Ankerscheibe dabei in einer Position befinden, in der sie an die Polflächen eines Rotors angezogen wird. Wenn die Kupplung aufgrund dieser Position der Ankerscheibe Drehbewegungen überträgt, entspricht dies dem eingekuppelten Zustand der Kupplung. In der angezogenen Stellung der Ankerscheibe ist die Haltekraft der Permanentmagnete stärker als eine Gegenkraft, die von dazu bestimmten Kupplungselementen an der Ankerscheibe angreifen. Daher muss in der angezogenen Position mit dem Elektromagneten keine Kraft erzeugt werden, die zur Erhaltung dieser Position unbedingt notwendig ist. Die Elektromagnetspule kann aber mit jenem Strom versorgt werden, den sie gegebenenfalls für weitere Aufgaben benötigt.(Erhöhung der Haftreibung bzw. Kompensation nachlassender Remanenz der Dauermagnete)
Die Ankerscheibe kann die angezogene Position nur verlassen, wenn der magnetische Fluiss im Bereich der Polflächen des zusammenwirkenden Bauteils so weit herabgesetzt wird, dass sich die Ankerscheibe aus der angezogenen Position löst und entfernt. Um einen magnetischen Fluss zu erzeugen, der denjenigen der Permanentmagnete verringert, wird die Magnetspule mit einer erhöhten Stromstärke beschaltet. Der Stromfluss im Elektromagneten ist so gepolt, dass das damit erzeugte Magnetfeld gegen das Feld der Permanentmagnete gerichtet ist. Die Stromstärke ist dabei so bemessen, dass die magnetische Anziehungskraft auf die Ankerscheibe kleiner als eine in dieser Position angreifende Gegenkraft wird, die von gegen die Permanentmagnete wirkenden Kupplungselementen aufgebracht wird.

Weil die magnetische Anziehungskraft, die von den Permanentmagneten an den Polflächen des zusammenwirkenden Bauteils erzeugt wird, mit zunehmendem Abstand sehr stark abfällt, bewegt sich die Ankerscheibe mit Hilfe der Gegenkraft z.B. beschleunigt auf eine neue Position zu. Diese Gegenkraft wird von Kupplungselementen wie beispielsweise Metallfedern oder elastisch verformbaren Verbindungselementen aufgebracht, die an der Ankerscheibe angreifen und insbesondere nur eine Bewegung der Ankerscheibe in axialer Richtung der Kupplungsdrehachse zulassen.

Die Kupplungselemente, die die Gegenkraft aufbringen, sind insbesondere so auf die Permanentmagnete abgestimmt, dass sie die Anziehungskraft der Permanentmagnete, die auf die Kupplungsscheibe in der stabilen getrennten Position angreifen, aufheben oder übertreffen. Die erfindungsgemäße Abstimmung der Kupplungselemente auf die Permanentmagnete bewirkt, dass die getrennte Position von der Ankerscheibe auch dann beibehalten wird, wenn der Betrag der Kraft des Elektromagneten gegenüber der Schaltkraft stark herabgesetzt ist oder vollkommen entfällt.

Die getrennte Position liegt vorzugsweise entweder nahe der Ruhelage eines entspannten, elastisch auslenkbaren Kupplungselements oder an einem mechanischen Anschlag, der sich in hinreichender Entfernung vom magnetisch zusammen wirkenden Bauteil befindet und die Bewegung der Kupplungsscheibe in Richtung der Gegenkraft begrenzt. In der angezogenen Position bildern die Polflächen, an die der von den Permanentmagneten erzeugte magnetische Fluss geführt wird, die Bewegungsgrenze für die Ankerscheibe.

Unter einsatznahen Einflüssen wie beispielsweise Schwingungen und Stößen bis zu einer vorgegebenen Stärke sind die Zustände der Kupplung stabil, wenn Verrückungen aus einer der ausgezeichneten Positionen, die im Vergleich zur gesamten Länge des Stellwegs hinreichend klein sind, die Ankerscheibe nicht dazu veranlassen, sich aus der geschalteten Position dauerhaft zu entfernen. Weil zumindest die Anziehungskraft auf die Ankerscheibe an die Polflächen des magnetisch zusammenwirkenden Bauteils, die von den Permanentmagneten erzeugt wird, mit wachsendem Abstand stetig abnimmt, gibt es eine neutrale Position zwischen der angezogenen und der getrennten Position, in der sich die Anziehungskraft an das zusammenwirkende Bauteil und die Gegenkraft von Kupplungselementen gegenseitig aufheben und die den Stellweg in zwei Teilstrecken unterteilt. Dabei übertrifft in der Teilstrecke, die die angezogene Position einschließt, die magnetische Anziehung der Ankerscheibe an das zusammenwirkende Bauteil an jeder Position die Gegenkraft der hierfür vorgesehenen Kupplungselemente. Dagegen wird die magnetische Anziehung an das Bauteil von der Gegenkraft von Kupplungselementen an jeder Stelle der Teilstrecke, in der sich die getrennte Position befindet, übertroffen. In der erfindungsgemäßen Kupplung sind die Kupplungselemente vorzugsweise so auf die Permanentmagnete abgestimmt, dass in beide axialen Richtungen etwa die gleiche Energie zur Verrückung der Ankerscheibe aufgebracht werden muss, um den jeweils eingestellten Zustand zu verlassen.

Aufgrund der Stabilität der ausgezeichneten Positionen der Ankerscheibe wird die Elektromagnetspule insbesondere nur für die Dauer des Positionswechsel der Ankerscheibe mit einer erhöhten Stromstärke betrieben, um entweder die Anzugskraft der Permanentmagnete oder die Gegenkraft von Kupplungselementen zu überwinden. Dadurch bietet die Kupplung den wesentlichen Vorteil, dass sie für die Dauer, in der sie im eingekuppelten bzw. ausgekuppelten Zustand verharrt, nur wenig oder gar keine Energie benötigt. Durch die kurze Dauer der Strombelastung wird die Elektromagnetspule geringerer thermischer Dauerbelastung ausgesetzt.

Wegen der stetigen und monotonen Abhängigkeit der dauermagnetisch erzeugten Anziehungskraft vom Abstand der Ankerscheibe können die Kupplungselemente mit Hilfe von drei Größen abgestimmt werden. Diese Größen sind die Remanenzinduktion der Permanentmagnete, die Länge des Stellwegs und die Stärke von Kupplungselementen, die die Kraft gegen die Anziehung der Ankerscheibe an das magnetisch zusammenwirkende Bauteil erzeugen. An verschiedene Stärken der permanentmagnetischen Remanenz kann die Kupplung dadurch angepasst werden, dass der Stellweg der Ankerscheibe entsprechend verändert wird oder indem die Kraft der gegen die Permanentmagnete wirkenden Kupplungselemente angepasst wird. Ebenso kann bei vorgegebener Stärke der Permanentmagnete die von Kupplungselementen erzeugte Gegenkraft so angepasst werden, dass sich die Ankerscheibe über einen entsprechend kürzeren bzw. längeren Stellweg bewegt. Daher bietet diese. Kupplung den Vorteil, dass sie verschiedene Ansätze erlaubt, ihre Dimensionierung an vorgegebene Einsatzbedingungen anzupassen.

Vorzugsweise werden die Kupplungselemente auf eine Weise aufeinander abgestimmt, dass ein Abstand zwischen der Ankerscheibe und dem mit der Ankerscheibe magnetisch zusammenwirkenden Bauteil erhalten bleibt, wenn der Stromfluss in der elektrischen Spule, deren magnetische Schaltkraft die Trennung von Ankerseheibe und dem Bauteil bewirkt, vollständig abgeschaltet wird. Die elektrische Spule wird mit Strom nur für eine Dauer beschaltet, die zum Ein- bzw. Auskuppeln erforderlich ist. Die Dauer, in der die Kupplung bis zum nächsten Schaltvorgang in ihrem jeweiligen Zustand verbleibt, ist jedoch wesentlich länger als die Schaltdauer. Daher bietet diese erfindungsgemäße Ausbildung die Vorteile, dass die Kupplung über die längeren Zeitdauern eines eingestellten Kupplungszustands keinen elektrischen Strom und somit keine Energie verbraucht und währenddessen auch keine elektrische Widerstandswärme innerhalb der Kupplung erzeugt.

Eine bevorzugte Ausbildung der Erfindung sieht vor, dass das Bauteil, mit dem die Ankerscheibe magnetisch zusammenwirkt, der Rotor ist. Dieses Kupplungselement wird üblicherweise zum Antrieb der Kupplung verwendet.

Eine weitere bevorzugte Ausbildung der Erfindung besteht darin, dass das magnetisch zusammenwirkende Bauteil ein Element ist, das mit der Abtriebsseite drehfest verbunden ist. Beispielsweise kann das Bauteil eine Reibscheibe sein, die mit der Abtriebswelle drehfest verbunden ist. Das mit der Abtriebsseite verbundene Bauteil ist z.B. so mit Permanentmagneten bestückt, dass sie die Ankerscheibe an den Polflächen des Bauteils gegebenenfalls gegen die Kraft, die von anderen Kupplungselementen ausgeübt wird, festhalten. Das Bauteil und die Ankerscheibe können eine Einheit bilden.

Weiterhin wird vorgeschlagen, dass, insbesondere in Verbindung mit einer Steuereinheit, die magnetischen Widerstände, die die Polflächenbereiche des mit der Ankerscheibe magnetisch zusammenwirkenden Bauteils magnetisch voneinander abgrenzen, in der Weise ausgebildet sind, dass die von den Permanentmagneten erzeugte magnetische Anziehungskraft des Bauteils auf die Ankerscheibe, wenn sich diese in einer stabilen vom Bauteil entfernten Position befindet, in der Weise begrenzt wird, dass die Ankerscheibe nur mittels der Elektromagnetspule aus der stabilen vom Bauteil getrennten Position an die Polfläche des Bauteils angezogen werden kann. Solche magnetischen Widerstände werden vor allem dazu genutzt, einen möglichst großen Teil des magnetischen Flusses zur Wirkung auf die Ankerscheibe zu führen. Insbesondere die kreisbogenförmigen Schlitze, mit denen Polflächenbereiche am Rotor voneinander magnetisch getrennt werden, sind ein Beispiel für solche magnetischen Widerstände an einem zusammenwirkenden Bauteil. Deshalb kann, die Kupplung nicht nur durch Kraft ausübende Kupplungselemente zur Ausbildung stabiler Schaltpositionen abgestimmt werden. Diese Abstimmung erfolgt vorteilhaft auch durch die Dimensionierung magnetischer Widerstände im zusammenwirkenden Bauteil, deren Anpassung im Vergleich zu Permanentmagneten und krafterzeugenden Elementen weniger aufwändig ist.

Weiter wird vorgeschlagen, dass die Erfindung insbesondere mit einer Steuereinheit so ausgebildet ist, dass der elektrische Stromfluss in der Elektromagnetspule während des Betriebs der Kupplung angepasst wird. Hierdurch kann zum einen ein Nachlassen der Remanenzinduktion der Permanentmagnete ausgeglichen werden. Zum anderen kann die Elektromagnetspule mit einem schwachen Dauerstrom die Betriebssicherheit der stabilen Zustände verbessern.

### Beschreibung eines Ausführungsbeispiels

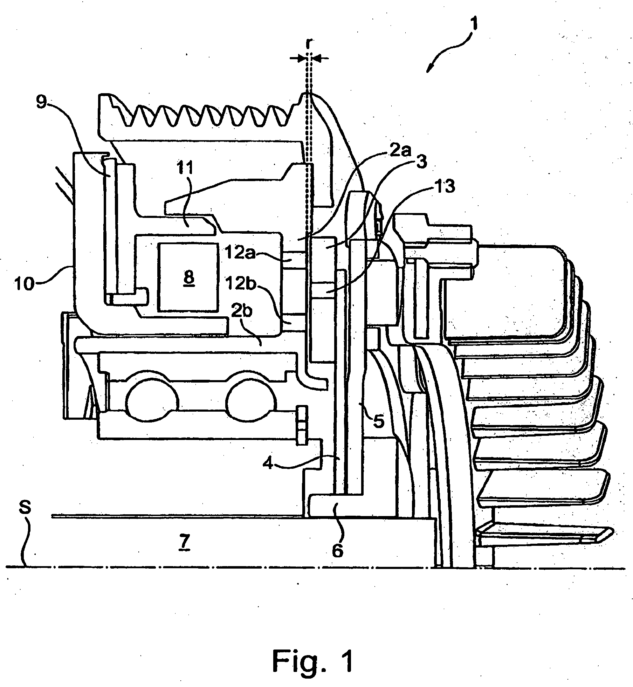

Ein Ausführungsbeispiel ist in der einzigen Figur dargestellt. Die Figur zeigt einen Ausschnitt einer elektromagnetischen Reibschaltkupplung in einer perspektivischen Schnittansicht.

Die dargestellte elektromagnetische Reibscheibenkupplung 1 entspricht der Ausbildung der Erfindung, bei der die Ankerscheibe 3 mit einem Rotor 2a, 2b nicht nur magnetisch, sondern auch reibmechanisch zusammenwirkt. Die Ankerscheibe 3 wird durch kreisbogenförmige Schlitze 13 in zwei konzentrische Polflächenbereiche unterteilt, die durch Stege zwischen den Polflächenschlitzen 13 miteinander verbunden sind. Dementsprechend wird die Polfläche des Rotors von zwei konzentrischen Reihen von Kreisbogenschlitzen an zwei unterschiedlichen radialen Abständen zur Drehachse des Rotors in drei Polflächenbereiche unterteilt. Die Polflächenbereiche des Ankers und des Rotors sind in radialer Richtung zueinander versetzt, ebenso die Reihen von Polflächenschlitzen 12a, 12b am Rotor und 13 an der Ankerscheibe. Dadurch wird der überwiegende Teil des magnetischen Flusses gezwungen, den von den Kreisbogenschlitzen gebildeten magnetischen Widerständen auszuweichen und in radialer Richtung zwischen dem Rotor und der Ankerscheibe hin und her zu wechseln.

Auf der der Ankerseite abgewandten Seite des Rotors reichen zwei koaxiale zylindrische Wände in axiale Richtung. Sie nehmen dort den magnetischen Fluss, der vom Permanentmagnete 9 erzeugt wird, über die Kupplungselemente 11 und 10 auf und umschließen mit ihnen gemeinsam den Elektromagneten 8. Der Permanentmagnet 9 ist ein kreisförmiger Scheibehring aus hartmagnetischem Material. Das kreisförmig die Drehachse S umlaufende Bauteil 11 nimmt den vom Permanentmagneten 9 erzeugten magnetischen Fluss auf einer seiner Polflächen auf und leitet ihn an den Rotor weiter: Auch das Kupplungselement 10 läuft kreisförmig um die Drehachse S und nimmt von der entgegengesetzten Polseite des Permanentmagneten dessen magnetischen Fluss auf. Der Elektromagnet 8, der Permanentmagnet 9 und die Kupplungsteile 10 und 11 sind fest mit dem anzutreibenden Aggregat verbunden. Die zylindrischen Wände des Rotors überdecken große Teile der zylindrischen Flächen der Kupplungsteile 10 und 11, von denen sie nur durch sehr schmale Luftspalte getrennt sind. Dadurch wird der magnetische Kreis sowohl des Permanentmagneten 9 als auch des Elektromagneten 8 über den Rotor geschlossen. Wenn die Polflächen der Ankerscheibe und des Rotors aneinander anliegen, wird der magnetische Widerstand weiter verringert und der magnetische Fluss, der vom Permanentmagneten 9 erzeugt wird, reicht aus, um die Ankerscheibe 3 dauerhaft anzuziehen.

Die Kraft des vom Permanentmagneten an die Polflächen des Rotors geführten magnetischen Flusses reicht allerdings nicht aus, die Ankerscheibe aus ihrer getrennten Position an die Polflächen des Rotors heranzuziehen. Über das federnde Verbindungselement 4 und die Kupplungselemente 5 und 6 ist die Ankerscheibe 3 mit der Abtriebswelle 7 verbunden. Dabei ist die Rückstellkraft des federnden Elementes 4 bei kleinen Auslenkungen aus der Ruhelage (getrennte Lage) zunächst sehr viel größer als die vom Permanentmagneten 9 erzeugte Anziehungskraft an die Polflächen des Rotors. In dieser vom Rotor getrennten Lage der Ankerscheibe klafft zwischen den Polflächen der Ankerscheibe und des Rotors z.B. der Gleichgewichtsabstand r, bei dem sich die Anziehungskraft durch den Permanentmagneten 9 und die Rückstellkraft des federnden Elementes 4 gerade gegenseitig aufheben. Weil ein Teil des vom Permanentmagneten 9 erzeugten magnetischen Flusses über die Stege und Polflächenschlitze im Rotor kurzgeschlossen wird, verringern die Begrenzungen der Polflächenbereiche des Rotors die Anziehungskraft auf die Ankerscheibe. Daher bieten sie eine wichtige Möglichkeit in dieser Anordnung, die Anziehungskraft des Permanentmagneten und die Rückstellkraft des federnden Elementes 4 so aufeinander abzustimmen, dass die Ankerscheibe zwei stabile Stellungen einnehmen kann.

Die Spulenwindung des Elektromagneten 8 bildet ebenfalls einen Kreisring um die Drehachse S. Wenn sie von einem Strom geeigneter Stärke und Polarität durchflossen wird, kann sie die Anziehungskraft des Permanentmagneten 9 so unterstützen, dass die vom federnden Verbindungselement 4 aufgebrachte Gegenkraft überwunden wird und die Ankerscheibe 3 angezogen wird. Weil mit abnehmenden Abstand zwischen den Pölflächen des Rotors 2a, 2b und der Ankerscheibe 3 die Anziehungskraft sehr stark ansteigt, reicht schon ein kurzer Strompuls in der Spule 8, um die Ankerscheibe 3 in den angezogenen Zustand zu überführen.

Aufgrund der nicht linearen Abhängigkeit der Anziehungskraft vom Abstand r muss zur Trennung der Ankerscheibe 3 ein höherer Strom mit umgekehrter Polarität die Magnetspule 8 durchfließen. Allerdings wird auch dann nur ein kurzer Strompuls benötigt, weil die magnetische Anziehung mit wachsendem Abstand r stark abfällt.

### Bezugszeichenliste:

- 1: Kupplung
- 2a, 2b: Rotor
- 3: Ankerscheibe
- 4: Ankerfeder
- 5: Flansch
- 6: Hülse
- 7: Welle
- 8: Elektromagnetspule
- 9: Permanentmagnet
- 10: magnetisch leitendes Kupplungselement (L-Querschnitt)
- 11: Magnetisch leitendes Kupplungselement (T-Querschnitt)
- 12a, 12b: kreisbogenförmige Schlitze (Rotor)
- 13: Kreisbogenförmige Schlitze (Anker)

## Patentansprüche

1. Elektromagnetisch betätigbare Reibscheibenkupplung (1) für ein Kraftfahrzeug mit einem Rotor (2a, 2b) (insbesondere zum Einleiten eines Antriebsmornents), einer Ankerscheibe (3), die über Magnetkräfte gegen den Rotor (2a, 2b) anziehbar ist, und einer schaltbaren Spule (8) zum Aufbringen einer Kraft auf die Ankerscheibe (3), wobei Permanentmagnete (9) vorgesehen sind, die eine Anzugskraft der Ankerscheibe (3) gegen ein mit der Ankerscheibe (3) magnetisch zusammenwirkendes Bauteil bewirken, so dass die Ankerscheibe (3) am Bauteil anliegt, wobei Kupplungselemente (4, 5, 6, 7, 9, 10, 11) derart aufeinander abgestimmt sind, dass die Ankerscheibe (3) in einer vom Bauteil getrennten Position verbleibt, wenn durch die elektrische Spule (8) entgegen der Kraft der Permanentmagnete (9) auf die Ankerscheibe (3) eine Schaltkraft aufgebracht wurde, die die Trennung der Ankerscheibe (3) vom Bauteil bewirkt und daraufhin eine magnetische Schaltkraft der elektrischen Spule (8) entfällt, **dadurch gekennzeichnet, dass** die Spule (8) in ihrer leistungsmäßigen Auslegung auf die zur Trennung der Ankerscheibe (3) notwendige Stromstärke derart abgestimmt ist, dass diese Stromstärke über der für einen Dauerbetrieb der Elektromagnetspule (8) zulässigen Stromstärke liegt.

2. Elektromagnetisch betätigbare Reibscheibenkupplung (1) nach Anspruch 1, **dAduroh gekennzeichnet,** dass die Kupplungselemente (4, 5, 6, 7, 9, 10, 11) in einer Weise aufeinander abgestimmt sind, dass ein Abstand zwischen der Ankerscheibe (3) und dem mit der Ankerscheibe (3) magnetisch zusammenwirkenden Bauteil erhalten bleibt, wenn der Stromfluss in der elektrischen Spule (8), deren magnetische Schaltkraft die Trennung von Ankerscheibe (3) und dem Bauteil bewirkt, abgeschaltet wird.

3. Elektromagnetisch betätigbare Reibscheibenkupplung (1) nach einem der vorgenannten Ansprüche, **dadurch gekennzeichnet, dass** das Bauteil der Rotor (2a, 2b) ist.

4. Elektromagnetisch betätigbare Reibscheibenkupplung nach einem der vorgenannten Ansprüche, **dadurch gekennzeichnet, dass** das Bauteil ein Element ist, das mit der Abtriebsseite (7) drehfest verbunden ist.

5. Elektromagnetisch betätigbare Reibscheibenkupplunq (1) nach einem der vorgenannten Ansprüche mit einer Steuereinheit, **dadurch gekennzeichnet, dass** magnetische Widerstände (12a, 12b), die die Polflächenbereiche des mit der Ankerscheibe (3) magnetisch zusammenwirkenden Bauteils magnetisch voneinander abgrenzen, in der Weise ausgebildet sind, dass die von den Permanentmagnetmitteln (9) erzeugten magnetische Anziehungskraft des Bauteils auf die beabstandete Ankerscheibe (3) in der Weise begrenzt wird, dass die Ankerscheibe (3) nur mittels der Elektromagnetspule (8) aus einer stabilen vom Bauteil entfernten Position an die Polflächen des Bauteils angezogen werden kann.

6. Elektromagnetisch betätigbare Reibscheibenkupplung (1) nach einem der vorgenannten Ansprüche, **dadurch gekennzeichnet, dass** die Kupplungselemente (4, 5, 6, 7, 9, 10, 11) derart aufeinander abgestimmt sind, dass ein stabiler Abstand der Ankerscheibe (3) vom Bauteil, mit welchem die Ankerscheibe (3) magnetisch zusammenwirkt, nur durch die zusätzliche Anziehungskraft des Elektromagneten (8) überwunden werden kann.

7. Elektromagnetisch betätigbare Reibscheibenkupplung (1) nach einem der vorgenannten Ansprüche mit einer Steuereinheit, **dadurch gekennzeichnet, dass** die Steuereinheit dazu ausgebildet ist, den elektrischen Stromfluss in der Elektromagnetspule (8) während des Betriebs der Kupplung (1) anzupassen.

## Claims

1. Electromagnetically activated friction disc clutch (1) for a motor vehicle with a rotor (2a, 2b) (in particular for introducing a drive torque), an armature plate (3) that can be pulled against the rotor (2a, 2b) by means of magnetic forces, and a switchable coil (8) for applying a force to the armature plate (3), wherein permanent magnets (9) that effect a pulling force of the armature plate (3) against a component magnetically cooperating with the armature plate (3) are envisaged, so that the armature plate (3) lies against the component, wherein clutch elements (4, 5, 6, 7, 9, 10, 11) are matched to each other in such a way that the armature plate (3) remains in a position that is separated from the component when a switching force that effects the separation of the armature plate (3) from the component is applied to the armature plate (3) by an electric coil (8) to counter the force of the permanent magnets (9), and the magnetic switching force of the electric coil (8) then ceases, **characterised in that** the coil (8) is matched to the current strength required for separating the armature plate (3) in its capacity design in such a way that this current strength lies above the current strength permissible for a continuous operation of the electromagnetic coil (8).

2. Electromagnetically activated friction disc clutch (1) according to claim 1, **characterised in that** the clutch elements (4, 5, 6, 7, 9, 10, 11) are matched to each other in a way that a distance remains between the armature plate (3) and the component magnetically cooperating with the armature plate (3) when the current flow in the electric coil (8), the magnetic switching force of which effects the separation of the armature plate (3) from the component, is switched off.

3. Electromagnetically activated friction disc clutch (1) according to one of the above mentioned claims, **characterised in that** the component is a rotor (2a, 2b).

4. Electromagnetically activated friction disc clutch according to one of the above mentioned claims, **characterised in that** the component is an element that is connected with the output side (7) in a torque-resistant way.

5. Electromagnetically activated friction disc clutch (1) according to one of the above mentioned claims, with a controller, **characterised in that** magnetic reluctances (12a, 12b), which magnetically delimit the pole surface areas of the component magnetically cooperating with the armature plate (3) from each other, are designed in such a way that the magnetic pulling force of the component towards the armature plate (3), located at a distance that is generated by the permanent magnet means (9), is delimited in a way that the armature plate (3) can be pulled towards the pole surfaces of the component by means of the electromagnetic coil (8) only from a stable position located at a distance from the component.

6. Electromagnetically activated friction disc clutch (1) according to one of the above mentioned claims, **characterised in that** the clutch elements (4, 5, 6, 7, 8, 10, 11) are matched to each other in such a way that a stable distance of the armature plate (3) from the component, with which the armature plate (3) magnetically cooperates, can be overcome only by means of the additional pulling force of the electromagnet (8).

7. Electromagnetically activated friction disc clutch (1) according to one of the above mentioned claims, with a controller, **characterised in that** the controller is designed for adjusting the electric current flow in the electromagnetic coil (8) during operation of the clutch (1).

## Revendications

1. Embrayage à disques de friction (1) à commande électromagnétique pour un véhicule automobile, comprenant un rotor (2a, 2b) (destiné en particulier à appliquer un couple d'entraînement), un disque d'induit (3), qui peut être attiré contre le rotor (2a, 2b) par des forces magnétiques, et une bobine (8) pouvant être commutée pour exercer une force sur le disque d'induit (3), des aimants permanents (9) étant prévus qui exercent une force d'attraction du disque d'induit (3) contre un composant coopérant magnétiquement avec le disque d'induit (3), de sorte que le disque d'induit (3) est en appui contre le composant, des éléments de couplage (4, 5, 6, 7, 9, 10, 11) étant adaptés de telle manière les uns aux autres que le disque d'induit (3) reste dans une position écartée du composant lorsqu'une force de commutation est exercée sur le disque d'induit (3) par la bobine électrique (8) à l'encontre de la force des aimants permanents (9) en provoquant la séparation du disque d'induit (3) du composant, et qu'ensuite une force de commutation magnétique de la bobine électrique (8) est supprimée, **caractérisé en ce que** la conception de la bobine (8), du point de vue de sa puissance, est adaptée de telle manière à l'intensité du courant nécessaire à la séparation du disque d'induit (3) que cette intensité du courant est supérieure à l'intensité du courant admissible pour un fonctionnement continu de la bobine électromagnétique (8).

2. Embrayage à disques de friction (1) à commande électromagnétique selon la revendication 1, **caractérisé en ce que** les éléments de couplage (4, 5, 6, 7, 9, 10, 11) sont adaptés les uns aux autres de telle manière qu'un écart entre le disque d'induit (3) et le composant coopérant magnétiquement avec le disque d'induit (3) est conservé lorsque le flux de courant dans la bobine électrique (8), dont la force de commutation magnétique provoque la séparation du disque d'induit (3) et du composant, est interrompu.

3. Embrayage à disques de friction (1) à commande électromagnétique selon l'une des revendications précédentes, **caractérisé en ce que** le composant est le rotor (2a, 2b).

4. Embrayage à disques de friction à commande électromagnétique selon l'une des revendications précédentes, **caractérisé en ce que** le composant est un élément qui est relié solidaire en rotation au côté de sortie (7).

5. Embrayage à disques de friction (1) à commande électromagnétique selon l'une des revendications précédentes comprenant une unité de commande, **caractérisé en ce que** des résistances magnétiques (12a, 12b), qui délimitent magnétiquement les unes des autres les zones de surface polaire du composant coopérant magnétiquement avec le disque d'induit (3), sont conçues de telle manière que la force d'attraction magnétique, produite par les moyens formant aimants permanents (9), du composant sur le disque d'induit (3) espacé est limitée de telle manière que le disque d'induit (3) ne peut être attiré qu'au moyen de la bobine électromagnétique (8) depuis une position stable éloignée du composant contre les surfaces polaires du composant.

6. Embrayage à disques de friction (1) à commande électromagnétique selon l'une des revendications précédentes, **caractérisé en ce que** les éléments de couplage (4, 5, 6, 7, 9, 10, 11) sont adaptés les uns aux autres de telle manière qu'un écart stable entre le disque d'induit (3) et le composant avec lequel le disque d'induit (3) coopère magnétiquement, ne peut être surmonté que par la force d'attraction supplémentaire de l'électroaimant (8).

7. Embrayage à disques de friction (1) à commande électromagnétique selon l'une des revendications précédentes comprenant une unité de commande, **caractérisé en ce que** l'unité de commande est conçue pour adapter le flux de courant électrique dans la bobine électromagnétique (8) durant le fonctionnement de l'embrayage (1).
